Europäisches Patentamt

European Patent Office

Office européen des brevets

(11) Publication number: **0 424 094 A1**

# EUROPEAN PATENT APPLICATION

(21) Application number: 90311324.9

(51) Int. Cl.5: **C01B 21/064**

(22) Date of filing: 16.10.90

(30) Priority: **17.10.89 US 422836**

(43) Date of publication of application:
**24.04.91 Bulletin 91/17**

(84) Designated Contracting States:
**AT BE CH DE DK ES FR GB GR IT LI LU NL SE**

(71) Applicant: **THE CARBORUNDUM COMPANY**
**200 Public Square**
**Cleveland Ohio 44114-2375(US)**

(72) Inventor: **Biernacki, Joseph J.**
**99 Britannia Drive**

East Amherst, New York 14051(US)
Inventor: **Shellhouse, Susan M.**
**62 Balbach Drive**
**Cheektowaga, New York 14225(US)**
Inventor: **DaVanzo, Stephen P.**
**425 Kaymar Drive**
**Tonawanda, New York 14150(US)**

(74) Representative: **Crack, Richard David et al**
**BP INTERNATIONAL LIMITED Patents**
**Division Chertsey Road**
**Sunbury-on-Thames Middlesex TW16**
**7LN(GB)**

(54) **Process for producing a stable, purified boron nitride powder and product produced thereby.**

(57) A process for producing stable highly purified boron nitride powder comprising dispersing boron nitride powder in a solution of a vehicle and a composition capable of forming a hydrophobic coating on the boron nitride powder and having functional groups which are ammonia getters, at a temperature of between 25° and 200°C, for a length of time sufficient to substantially remove impurities from the boron nitride powder and provide a coating thereon, separating said boron nitride powder and solution to recover the washed boron nitride power, and drying said powder to produce a finished boron nitride having a low amount of impurities and being resistant to the formation of impurities and product produced thereby.

FIG. 1

# PROCESS FOR PRODUCING A STABLE, PURIFIED BORON NITRIDE POWDER AND PRODUCT PRODUCED THEREBY

## BACKGROUND OF THE INVENTION

The present invention relates generally to a process for producing a stable, highly purified boron nitride powder and, in particular, to a process which produces a hexagonal boron nitride which has a low amount of impurities, such as ammonia, boric oxide, ammonia borates, or related compounds and which is resistant to the formation of such compounds.

Boron nitride comes in a variety of crystalline structures and has a variety of uses from polishing agents to lubricants. Hexagonal boron nitride is a very desirable form and a white composition having hexagonal layer structure similar graphite. Because of its properties, it has found uses in heat conductivity applications, electrical insulation applications, corrosion resistance applications, lubrication applications, and as a plastic additive. Boron nitride can be molded and used in composite materials or as a raw material for cubic boron nitride. It is used in electronic materials, nonoxidizing ceramics sintering filler powder, makeup materials, medical additives. Boron nitride can be blended with cosmetic materials to improve smoothness, adhesion and provide a longer-lasting makeup effect.

One caution for boron nitride is that it reacts in the presence of moisture. The boron nitride molecule (i.e., BN) is believed to react with the water ($H_2O$) to form ammonia ($NH_3$), boric oxide ($B_2O_3$) and ammonium borate, which actually can be a variety of ammonia borate compositions and which can, in turn, decompose to form boric oxide and ammonia gas, all of which would be impurities for the boron nitride. Since the human nose is sensitive to ammonia gas, this by-product can be detected in small amounts and therefore can be objectionable in situations where boron nitride is used as products which comes in contact with humans, such as plastics or cosmetics.

Various processes are taught by in the prior art to produce a boron nitride having low amounts of ammonia, borates, and ammonium borate impurities. For example, U.S. Patent No. 1157271 to G. Weintraub teaches a process of heat treating a powder which has had the water soluble borates removed by washing to provide a more stable boron nitride finished product. Japanese patent Application No. 62-107866, which is assigned to Kawasaki Steel KK, and was published as unexamined Patent Application Kokai No. 63-274603, teaches a process of washing a boron nitride with an aqueous solution of an organic solvent and a surfactant, i.e., a surface active agent, and subsequently heating the washed powder to 2000 to 2500°C in an nonoxidizing atmosphere to produce a purified, stable boron nitride product. Two other Kawasaki Steel KK patent applications, namely Nos. 60-239502 (Kokai No. 62-100403) and Application No. 60-239503 (Kokai No. 62-100404) also teach a heating process in which the heating is done under reduced pressure to purify the hexagonal boron nitride. Also, Shiseido KK Patent Application No. 61-178155 (published unexamined Patent Application Kokai 63-33313) teaches purification of boron nitride by boiling the powder.

Thus, a need exist for a process, and product produced thereby, for producing highly purified boron nitride having improved stability. It is an object of the present invention to provide a process for producing a stable, highly purified boron nitride powder and a more stable, highly purified powder.

## SUMMARY OF THE INVENTION

The present invention is the result of the unexpected discovery that certain surface-active agents which are hydrophobic and have functional groups which are ammonia getters, when added in sufficient quantity in a one-step process or when added via a sizing step to provide a coating on the boron nitride particles, will provide an improved stability to decomposition for the boron nitride particles. The hydrophobic coating serves to repel moisture which would otherwise be reactive with the boron nitride particles and produce ammonium borate impurities, while the ammonia getters functional groups tie up the ammonia if it is generated on the boron nitride surface because of moisture which does contact and react with that surface. The process of the present process results in a highly purified boron nitride powder which is more stable because it is resistant to decomposition in the presence of moisture and produces less ammonia smell because any ammonia given off by the reaction with moisture will be tied-up by or reacted with the functional groups which act as ammonia getters.

The present invention will become more apparent from the following detailed description of a preferred embodiment taken in conjunction with accompanying drawings.

## BRIEF DESCRIPTION OF THE DRAWINGS

Figure 1 is a schematic of the apparatus for use in process of the present invention to produce a stable, highly purified boron nitride powder.

Figure 2 is a graph which compares overtime the rate of ammonia extraction for a starting powder, a commercially available powder and a powder in accordance with the present invention.

## DESCRIPTION OF THE PREFERRED EMBODIMENTS

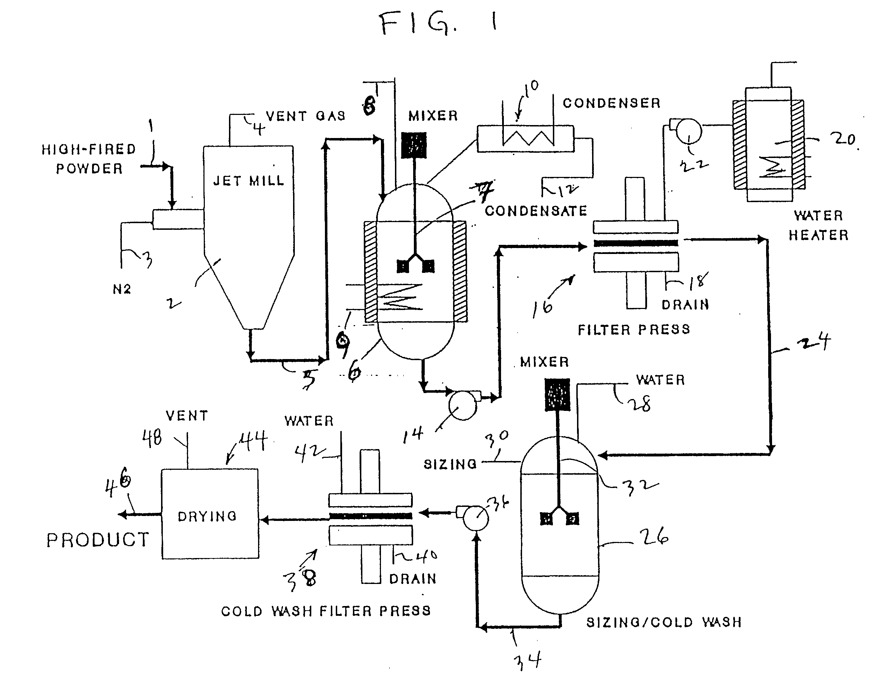

Figure 1 is a schematic showing the process in accordance with the present invention for producing stable, high purified boron nitride powder. As shown in Figure 1, a high-fired boron nitride powder 1 is fed into a jet mill 2, such as is commercially available, where the boron nitride powder would undergo a particle size reduction, in an inert atmosphere such as nitrogen supplied at 3 and vented by line 4.

A high-fired boron nitride powder is one which has been fired at a temperature of 1500 to 2500°C to provide a purification of the raw powder as it comes from the manufacturing process to remove borates, ammonium, ammonium borates and related compounds, to reduce the formation of volatile ammonia from boron nitride powders, and to convert the raw boron nitride powder to the hexagonal crystalography. This tends to increase the particle size so the high-fired powders usually are subjected to a grinding step to achieve a particle size reduction and produce powder of the desired useful particle size. This can be done using a jet mill 2, or alternatively, the grinding could be done in a ball mill, a hammer mill or the like. In any event, it is the particle size reduction process which tends to reintroduce impurities on the boron nitride powder surface due to reaction with the moisture present in the atmosphere or where it is present as a residue in the powder itself. So, it is desirable to process the powder further to produce a stable, highly purified boron nitride powder.

In the process of the present invention, the milled boron nitride powder exits the jet mill at 5, enters a purification mixing vessel 6 which is provided with an agitator 7 for mixing the powder and an aqueous solution fed in to the vessel by line 8. A suitable means 9, such as an electrically powered heating element, is provided for heating the mixture of boron nitride powder and the solution which dissolves impurities from the boron nitride surface to clean and purify the boron nitride powder. Optionally, this step could also include the coating or sizing step, which be discussed further hereinafter.

The solution comprises at a minimum a vehicle and a composition which is reactive with the ammonia and ammonia impurities on the surface of the boron nitride particles and which will provide a hydrophobic coating on the boron nitride particles. Preferably, the solution is an aqueous solution which also includes an acid, and/or an organic solvent, at least one surface-active agent (hereinafter referred to an surfactant).

The solution when used to clean the boron nitride particles, is a mixture of ingredients designed to remove impurities from the surface of the boron nitride powder particles, and, where the coating is done in a one-step process, to further provide a residue coating on the boron nitride particles, which coating will be hydrophobic and have functional sites which will act as ammonia getters. The vehicle can be water or an organic solvent and is one in which boron nitride impurities, such as boric oxide, ammonium borate, and the like, are soluble. When cleaning and coating are done in a one step process, water is the preferred vehicle. The organic solvent is desirably one that is miscible in the vehicle and will serve to facilitate delivery of the hydrophobic coating onto the particle surface. The organic solvent may solubalize the hydrophobic coating material and may provide other benefits to facilitate the cleaning and coating. Preferred organic solvents include methanol, ethanol, glycerin, and similar alcohols. The composition which is reactive with the ammonia and ammonia impurities is desirably a composition which reacts with ammonia to create a compound which is soluble in the aqueous solution, and thus will be removed in the solution. Suitable reactive ammonia compositions would include organic acids and inorganic acids, with acetic acid, oleaic acid, stearic acid, propionic acid, sorbic acid, succinic acid, adipic acid, fumaric acid, lactic acid, malic acid, tartaric acid, citric acid,and maleic acid being preferred compositions, with acetic acid being most preferred. Alternatively, the ammonia reactivity could be provided by the surfactant where the surfactant has sites which are reactive with the ammonia. These could be sites which are acid or alcohol sites, but which have acid reactivity with respect to the ammonia. In the preferred process, a separate acid is added to the aqueous solution.

The surfactant is desirably one that provides wetting of the boron nitride particles when they are combined with the aqueous solution to aid in dissolving impurities from the boron nitride surface, as well as to leave a residue coating when the aqueous solution is separated from the cleansed boron nitride particles, which residue provides a hydrophobic coating having ammonia getter sites. In Applicant's experimental work, which will be stated by way of an example hereinafter, it was preferred to use a two-part surfactant, one of which was hydrophilic and the other being more hydrophobic and providing a hydrophobic having ammonia getter sites, although a one-component surfactant could be possible. The surfactants of choice consist of molecules that combine lipophilic or oil-loving groups (such as fatty acid groupings) and hydrophilic or water-loving groups (such as the OH or hydroxyl groupings). So, the functionality of a surfactant depends to a large extent on the affinity of a portion of its molecules for oil or water. Often this functionality is achieved by a blend of surfactants, with the blend being described by its HLB number, which is the Hydrophile-Lipophile balance system. Usually, the higher the HLB number, the more hydrophilic the surfactant, while the lower the number, the more the surfactant is oil loving or hydrophobic. The calculation of the HLB number is well known and can be found in Handbook for Food Additives, pages 420-421 published by The Chemical Rubber Company (1968). In the present application, it was discovered that a surfactant blend having an HLB of 10 would function both in the purification step and in a sizing step, which will be described later. But, it is possible that a surfactant blend having an HLB of greater than 10 could be used in the purification step, while a surfactant blend having a HLB of less than 10 could be used in the sizing step.

The preferred surfactant is a combination of a sorbitan fatty ester with a fatty acid partial ester of sorbitol anhydride. The preferred sorbitan fatty acid ester is polyoxyethylene sorbitan monostearate, although it could also be selected from polyoxyethylene sorbitan monolaurate, polyoxyethylene sorbitan monooleate, polyoxyethylene sorbitan monopalmitate, or polyoxyethylene sorbitan tristearate. The preferred fatty acid to partial ester of sorbitol and hydride is sorbitan monostearate, although it could also be selected from sorbitan monolaurate, sorbitan monooleate or sorbitan monopalmate. Further, the fatty acid partial ester of sorbitol anhydride is used because it provides a hydrophobic residue on the boron nitride particles, and has acid functionality provided by carboxyl and hydroxide groups, which function as ammonia getters. So, other surfactants which would provide a hydrophobic residue having ammonia getter functionality could be employed, either alone or in conjunction with another surfactant which is more hydrophilic, thus providing a more dispersability for the hydrophobic surfactant could be employed if they met the desired functionality of the surfactant.

Other additives could be used in the solution to modify or enhance the cleaning and/or coating function of the solution without deviating from the scope or interest of this invention.

The particles are kept in the agitated solution, which is maintained at a temperature of between 25 and 100°C for a period of up to about two hours. The purification apparatus 6 can be operated so the vapors coming off the agitated mixture are condensed by a condensor shown generally at 10 and the condensate removed via a condensate collection line 12, which is a reactive distillation process, or the vapors could be refluxed back into the mixing vessel. It is contemplated that additional additives could be used which would facilitate the reactive distillation process. The precise amount of time and temperature for the operation of purification apparatus 6 is not critical, but will depend upon the overall purification efficiency and the amount of impurities on the boron nitride particles which are being purified. After cleansing the particles, the slurry can be pumped via pump 14 to a filter press shown generally at 16 where the solution is separated from the boron nitride particles via drain 18. Additionally, the particles can be washed by pumping a hot water wash from water heater 20 via pump 22 through the filtered material with the spent wash being passed out drain 18. Also, other means for separating the solution and the particles can be employed.

The filtered particles are then passed as shown by line 24 to a sizing tank 26 in which the particles are coated with a material which provides the hydrophobic coating and ammonia getter sites. The particles are mixed with water fed into the tank via line 28 and a sizing solution fed via line 30 into tank 26 which has an agitator 32 for mixing the water, boron nitride particles and sizing solution. The sizing solution 30 is an aqueous solution of an organic solvent and at least one surfactant. In the sizing step, the cleansed boron nitride particles are coated with a surfactant which provides a hydrophobic coating and which has ammonia getter functional groups which tie-up any ammonia generated by the decomposition of the boron nitride particles. Also, the particles need not remain in the sizing solution any particular length of time as long as there is time to achieve an even distribution of the particles in the solution for the coating result. The surfactant is preferably a blend of the same surfactants employed in the purification step, although as discussed above, the use of a single surfactant is contemplated.

After the boron nitride particles are coated, the slurry of particles and sizing solution is fed via line 34 and pump 36 to a cold wash filter press 38 in which the particles are separated from the liquid which is drained off by line 40. Additionally, the particles can be rinsed by feeding fresh water into the filter press from line 42 and removing the rinse water via drain line 40.

After filtering, the particles are moved to appropriate dryer 44 where the particles are dried under low heat to produce a stable, highly purified boron nitride product 46. The exact temperature is not critical but it should be high enough to dry the particles, but low enough to avoid oxidizing the particles, preferably the temperature is about 50 to 100°C, with 75°C being further preferred. Any water vapor can be removed via vent 48 from dryer 44.

The process of the present invention can best be understood by the following example which was carried out in laboratory scale equipment, but which can be practiced in such as is illustrated in Figure 1.

Example 1

To a 10-liter polyethylene mixing vessel, 5,400 ml of hot water were added. The polyethylene mixing vessel was equipped with a stirrer for keeping a mixture agitated. Next, 300 ml of acetic acid was added to the hot water, along with a solution of 300 ml of ethanol and 12 grams of an HBL 10 solution at a 25 weight percent combined concentration of sorbitan monostearate and polyoxyethylene sorbitan monostearate. The HBL 10 solution was prepared by mixing 75 grams of ethanol with 12 grams of sorbitan monostearate and 13 grams of polyoxyethylene sorbitan monostearate at greater than 65°C. The ethanol and HLB 10 solution was slowly added to the hot water and acetic acid mixture while mixing vigorously. Next, 667 grams of jet milled high fired boron nitride powder, which are characterized in Table I, were slowly dispersed into the aqueous solution until all of the powder was wet and a slurry was formed.

The slurry was then placed into a 12,000 ml distillation flask which was sealed and connected to a vacuum source which was operated to a pull a vacuum on the mixture of the slurry for about 15 minutes. Next, the flask was connected to a refluxing unit and heated to about the boiling point of the mixture for about three hours with the vapor being condensed and fed back into the flask via the refluxing unit. After three hours, the heat was removed and the slurry was allowed to stand for about one hour. Following that, the boron nitride solids were filtered from the slurry in 500 ml increments by placing 500 ml of slurry in a Buchner funnel, draining the aqueous solution, and then passing 1500 ml of hot water through each increment of the filter cake.

Next, the filtered solids were added to 2000 ml of hot water in a 10-liter polyethylene mixing tank to which had been added a sizing composition made by mixing 12 grams of the HBL 10 solution, which was used in the purification step, to 500 ml of ethanol at about 65°C. The mixture of hot water and filtered solids was agitated vigorously for approximately ten minutes before the sizing solution was added to the mixing tank. After the sizing solution was added, the mixture then was agitated for 30 more minutes, followed by allowing it to stand for about 12 hours before filtering the solids from the mixture. The filter cake was then dried at about 70°C for 48 hours to produce a powder which was highly purified and stable.

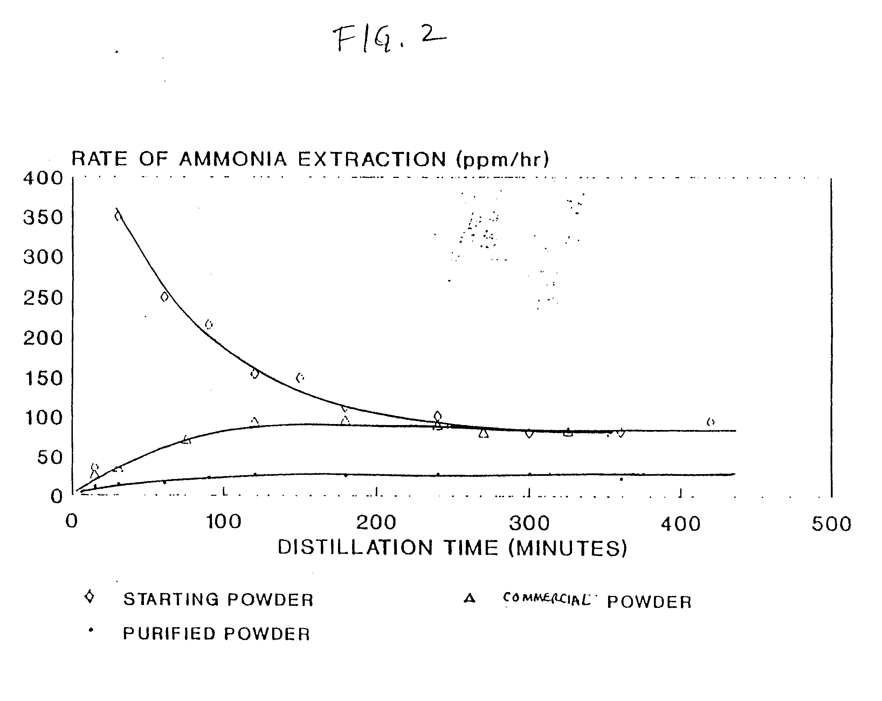

To demonstrate that the powder produced in accordance with the present invention the amount of ammonia associated with the boron nitride powder was measured using an extractive distillation technique. The rate of latent ammonia extraction for the starting powder, for a commercially available powder, and for a purified powder in accordance with the present invention are reported in the graph shown in Figure 2, and in Table I, the boric oxide extractable ammonia, oxygen amounts, etc. are reported. The rate of ammonia extraction is an indication of the long term stability of the finished boron nitride powder. The results show that the performance for the purified powder in accordance with the present invention is substantially more stable than a commercially available powder.

5

TABLE I

| | STARTING POWDER | PURIFIED POWDER | | COMMERCIAL POWDER |
|---|---|---|---|---|
| | | Example 1 | Example 2 | |
| $B_2O_3$ (% by wt.) | 0.21 | <0.03 | <0.03 | 0.7 |
| Oxygen (% by wt.) | 0.44 | 0.27 | 0.47 | 1.45 |
| Extractable Ammonia (PPM) | 320 | 22.1 | N.A. | 37 |
| Volatile Ammonia (Average PPM per gram over an 8 hour period) | 3.3 | Zero | Zero | Zero |
| Volatile Ammonia (Average PPM per gram over a 7 day period as a Qualitative value) | >1.2 | Zero | Zero | 0.06 |
| Rate of $NH_3$ Formation in boiling water ($\mu g$ $NH_3$ per gram powder per hour) | 85 | 28 | 12 | 85 |

Example 2

In another experiment, the results of which are reported as Example 2, in Table I, the purification step was modified by omitting the sorbitan monostearate and the ethanol and the acetic acid was used in an amount of 600 ml, the purified powder was recovered by settling overnight and decanted, and the sizing step was modified by using 24 grams of HLB 10 solution and not adding the 500 ml of ethanol.

As can be seen from Table I, the results from Example 2 show another process by which stable highly purified boron nitride powder can be made.

Example 3

Example 1 was repeated using a starting powder measuring 900 ppm of extractable ammonia, and the finished powder, i.e., washed and sized, measured 54 ppm of extractable ammonia. This was contrasted to a washed powder made by eliminating the sizing step and using only 0.2g of HLB 10 solution. The washed-only powder measured 135 ppm of extractable ammonia, which shows that a washed and coated powder achieves lower levels of extractable ammonia than a washed-only powder.

The extractive distillation technique (i.e., the thirty minute distillation method) involves a process where the sample to be measured, e.g., two grams of boron nitride powder is placed in 100 ml of deionized water in a boiling flask which is fitted with a distillation apparatus, including a water-cooled condensor, with the condensate being collected in a receiving flask. The slurry is boiled for one-half hour and the condensate is recovered below the liquid surface in the receiving flask which is filled with 70 ml of deionized water. At the end of the distillation the concentration of ammonium ion (as parts per million of $NH_4^+$) in the residue and in the condensate was measured by using an ammonia selective electrode. The total weight of ammonium ion (micrograms $NH_4$ +) was determined and divided by two grams to yield the parts-per-million (ppm) of ammonia on a solids weight basis released during the distillation treatment. The data reported in Table I as extractable ammonia is the amount of $NH_3$ evolved in the first half hour of distillation. Figure 2 is a summary of the rate of ammonia extraction in parts per million per hour which are recovered by this test over an extended period of time.

The measurement of the oxygen, boric oxide, and volatile ammonia amounts of the starting and purified powders, as well as the commercially available powder were done by the following techniques.

The oxygen was measured using a LeCo RO-116 analyzer which consists of a determinator which houses a microprocessor and infrared detection cell, and an EF-100 furnace which has two electrodes that produce a high electrical current used to heat the sample. Oxygen measurements are obtained by placing an empty graphite crucible between the two electrodes. The crucible is purged of contaminants by outgassing with an inert carrier gas while heating, then the sample, enclosed in a tin capsule, was placed in the outgassed crucible and the crucible reheated to high temperature which caused total decomposition of the sample releasing the oxygen which combines with the graphite and forms carbon monoxide. The infrared detector cell measures the amount of carbon monoxide (CO) evolved which was then related to the total oxygen in the sample.

The boric oxide or $B_2O_3$ is measured by taking two grams of powder and adding them to a 3:1 ratio solution of methanol and water. The mixture is then refluxed at low rate for 20 minutes and allowing time for $B_2O_3$ and methanol to react to form boric acid trimethylester, according the the following formula:

$$B_2O_3 + 6CH_3OH \rightarrow 2B(CH_3O)_3 + 3H_2O$$

After cooling, 100 ml of the liquid are added to a 4% solution of mannitol and water. The resulting hydrolysis of the ester forms methanol and boric acid, as follows:

$$2B(CH_3O)_3 + 6H_2O \rightarrow 2B(OH)_3 + 6CH_3OH$$

The boric acid then reacts with the mannitol to form mannitoboric acid, and when the solution is titrated with .1N NaOH to a pH of 9, the amount of $B_2O_3$ is computed from the titrated results.

The volatile ammonia was measured by sampling the gas above a bed of powder in a technique known as a head-space analysis, which can be done using a Drager tube analysis. The analysis was performed by sealing a given amount of powder in a jar for a specified amount of time and continuously sampling the gas in the jar. The Drager tube method consisted of sealing a passive Drager tube in a jar along with a measured amount of powder. The gas was sampled continuously and measurements made at given time intervals.

As can be seen, from the results in Table I and Figure II, the process of the present invention produced a coated boron nitride product which is highly purified and more stable than the commercially available powder tested.

While the preferred embodiments of the present invention have been illustrated in detail, it should be apparent that modifications and adaptations of those embodiments will occur to those skilled in the art. However, it is to be expressly understood that such modifications and adaptations are within the sphere and scope of the present invention as set forth in the following claims.

## Claims

1. A process for producing stable highly purified boron nitride powder comprising:

(1) dispersing boron nitride powder in solution of a vehicle and a composition capable of forming a hydrophobic coating on the boron nitride powder and having functional groups which are ammonia getters for a length of time sufficient to substantially remove impurities from the boron nitride powder and coat said boron nitride powder particles,

(2) separating said boron nitride powder and solution to recover the washed boron nitride powder, and

(3) drying said powder to produce a finished boron nitride having a low amount of impurities and being resistant to the formation of impurities.

2. The process of claim 1 wherein said composition is a surface active agent which is present in an amount sufficient to leave a residue coating of up to about 10% by weight of the boron nitride of said surface active agent on said boron nitride powder.

3. The process of claim 2 wherein said surface active agent is organic and has hydrophobic groups and terminates in acid functional groups.

4. The process of claim 1 wherein said solution includes at least two surface active agents, one hydrophylic groups and the other having hydrophobic groups.

5. The process of claim 1 wherein said composition is a surface active agent which is a combination of a sorbitan fatty ester and a fatty acid partial ester of sorbitol anhydride.

6. The process of any one of claims 1 to 5 wherein said solution further includes a composition which is reactive with ammonia and is selected from the group consisting of organic acids or inorganic acids.

7. The process of claim 6 wherein said composition which is reactive with ammonia is selected from the group consisting of acetic acid, oleaic acid, stearic acid, propionic acid, sorbic acid, succininc acid, adipic acid, fumaric acid, lactic acid, malic acid, tartaric acid, citric acid, and maleic acid.

8. The process of any one of claims 1 to 7 wherein said solution further includes an organic solvent.

9. The process of claim 8 wherein said organic solvent is an alcohol selected from the group consisting of methanol, ethanol, and glycerin.

10. The process of any one of claims 1 to 9 wherein said finished boron nitride has 0.3 weight percent or less of boric oxide or soluble boron-related compounds and an amount of extractable ammonia of less than 100 parts per million as measured by the thirty minute distillation method.

11. The process of any one of claims 1 to 10 wherein said finished boron nitride has 0.15 weight percent or less of boric oxide or soluble boron-related compounds and an amount of extractable ammonia of less than 50 parts per million as measured by the thirty minute distillation method.

12. The process of claim 2 wherein said residue is a fatty acid partial ester of sorbitol anhydride.

13. The process of any one of claims 1 to 12 wherein said coating is in an amount of up to 5% by weight.

14. The process of any one of claims 1 to 13 wherein said coating is in an amount of up to 2% by weight.

15. The process of any one of claims 1 to 14 wherein said coating is in an amount of up to 0.5% by weight.

16. The process of claim 5 wherein said fatty acid partial ester of sorbitan anhydride is selected from the group consisting of sorbitan monostearate, sorbitan monolaurate, sorbitan monoleate, and sorbitan monopalmate.

17. The process of claim 5 wherein said sorbitan fatty acid ester is selected from the group consisting of polyoxyethylene sorbitan monolaurate, polyoxyethylene sorbitan monostearate, polyoxyethylene sorbitan monooleate, polyoxyethylene sorbitan monopalmate, and polyoxyethylene sorbitan tristearate.

18. The process of claim 1 wherein said coating is hydrophobic and reactive with ammonia.

19. The process of any one of claims 1 to 18 further including separately purifying said powder using solvent in an amount sufficient to provide a clean, washed boron nitride powder before subsequently dispersing said washed powder in said solution of a vehicle and said composition which forms a hydrophobic coating on at least part of the boron nitride particles and has functional groups which are ammonia getters.

20. The process of claim 1 wherein said solution is at a temperature of between 25° C and the boiling point of the solution.

21. A boron nitride product made in accordance with the process of claim 1.

22. A boron nitride powder having 0.3 weight percent or less of boric oxide or soluble boron-related compounds and an amount of extractable ammonia of less than 100 parts per million as measured by the thirty minute distillation method, having a hydrophobic coating thereon.

23. A boron nitride powder having 0.3 weight percent or less of boric oxide or soluble boron-related compounds and an amount of extractable ammonia of less than 100 parts per million as measured by the thirty minute distillation method, having a coating thereon which coating having functional groups which are ammonia getters.

FIG. 1

EP 0 424 094 A1

# FIG. 2

RATE OF AMMONIA EXTRACTION (ppm/hr)

plotted against DISTILLATION TIME (MINUTES)

◊ STARTING POWDER   △ COMMERCIAL POWDER

• PURIFIED POWDER

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 288 645 (KAWASAKI STEEL CORP.) * claims 8-16 * | 1,5,17 | C 01 B 21/064 |
| A,D | PATENT ABSTRACTS OF JAPAN vol. 13. no. 95 (C-573)(3443), 6 March 1989; & JP - A - 63274603 (KAWASAKI STEEL CORP.) 11.11.1988 | 1 | |
| A | PATENT ABSTRACTS OF JAPAN vol. 12, no. 22 (C-470)(2869), 22 January 1988; & JP - A - 62176904 (KAWASAKI STEEL CORP.) 03.08.1987 | 1 | |
| A | PATENT ABSTRACTS OF JAPAN vol. 13, no. 419 (C-637)(3767), 18 September 1989; & JP - A - 157409 (KAWASAKI STEEL CORP.) 20.06.1989 | 1 | |
| A | PATENT ABSTRACTS OF JAPAN vol. 12, no. 258 (C-513)(3105), 20 July 1988; & JP - A - 6345104 (KAWASAKI STEEL CORP.) 26.02.1988 | 1 | |

TECHNICAL FIELDS
SEARCHED (Int. Cl.5)

C 01 B 21/00

The present search report has been drawn up for all claims

| Place of search | Date of completion of search | Examiner |
|---|---|---|
| Berlin | 29 January 91 | CLEMENT J.P. |